## Europäisches Patentamt
## European Patent Office
## Office européen des brevets

(19)

(11) Veröffentlichungsnummer: **0 136 671**
**B1**

(12) # EUROPÄISCHE PATENTSCHRIFT

(45) Veröffentlichungstag der Patentschrift:
**27.01.88**

(51) Int. Cl.⁴: **A 61 C 13/225**

(21) Anmeldenummer: **84111623.9**

(22) Anmeldetag: **28.09.84**

(54) **Abnehmbare Zahn-Prothese sowie Verfahren zu ihrer Herstellung und Hilfsmittel zur Durchführung des Verfahrens.**

(30) Priorität: **03.10.83 DE 3335904**
　　　　　　**24.05.84 DE 3419359**

(43) Veröffentlichungstag der Anmeldung:
**10.04.85 Patentblatt 85/15**

(45) Bekanntmachung des Hinweises auf die Patenterteilung:
**27.01.88 Patentblatt 88/4**

(84) Benannte Vertragsstaaten:
**AT BE CH DE FR GB IT LI LU NL SE**

(56) Entgegenhaltungen:
**US - A - 2 748 480**
**US - A - 3 717 931**
**US - A - 4 024 211**

(73) Patentinhaber: **Obersat, Adam, Gärtnereistrasse 25,
D-6750 Kaiserslautern (DE)**

(72) Erfinder: **Obersat, Adam, Gärtnereistrasse 25,
D-6750 Kaiserslautern (DE)**

(74) Vertreter: **Bernhardt, Winfrid, Dr.-Ing.,
Kobenhüttenweg 43, D-6600 Saarbrücken (DE)**

## Beschreibung

Die Erfindung betrifft eine abnehmbare Zahnprothese, die auf ein festsitzendes Prothesenteil aufsteckbar und an ihm anklemmbar ist mittels eines an der Zahnprothese, insbesondere nahe ihrer Unterseite, angeordneten gefederten Riegelelementes, das eine langgestreckte und schmale, in eine Kerbe des festsitzenden Prothesenteils einrastende Frontseite aufweist. Ferner betrifft die Erfindung ein Verfahren zur Herstellung der Zahnprothese sowie ein Hilfsmittel zur Durchführung des Verfahrens.

In den bekannten Zahnprothesen dieser Art ist das genannte Riegelelement eine Biegefeder aus Draht, die sich mit einem Teil ihrer Länge in die genannte Kerbe legt.

Dies ist die flachste bekannte Klemmvorrichtung. Sie nimmt beispielsweise bei 0,7 mm Drahtdicke einschliesslich des Raumes für die Bewegungsfreiheit des Drahtes und des darunter und darüber noch benötigten Materials eine Höhe von 2,0 mm ein. Rastende Klemmvorrichtungen mit durch Schraubenfedern gefederten, runden Bolzen als Riegelelementen, die gleichfalls zum Befestigen einer auf ein festsitzendes Prothesenteil aufsteckbaren abnehmbaren Prothese zur Verfügung stehen und beispielsweise auch aus der US-A-2 784 480 und der US-A-3 717 931 bekannt sind, haben immerhin einen Durchmesser von 2,9 mm und beanspruchen einschliesslich des erforderlichen Umgebungsmaterials eine noch grössere Höhe. Sie sind allerdings im ganzen kleiner und kompakter als die Klemmvorrichtungen mit der Biegefeder, die abgesehen von der vergleichsweise geringen Höhe eine nicht unerhebliche räumliche Ausdehnung braucht, auch für die Befestigung der Biegefeder. Unterhalb einer Mindestgrösse lässt sich die Klemmvorrichtung mit der Biegefeder als Riegelelement nicht gestalten. Der Zahntechniker kann noch kleinere Federdrähte nicht mehr recht handhaben und die für ihren Einbau erforderlichen Massnahmen praktisch nicht mehr bewältigen.

Der Erfindung liegt die Aufgabe zugrunde, eine Klemmvorrichtung zu schaffen, die kleiner ist und auch noch flacher sein kann.

Gemäss der Erfindung ist zu diesem Zweck eine Zahnprothese der eingangs bezeichneten Art vorgesehen, bei der das Riegelelement durch eine in einem flachen Hohlraum an der Zahnprothese angeordente Feder gefedert ist, die nur innerhalb einer Ebene, und zwar mindestens etwa U-förmig, gebogen ist.

Die solchermassen gestaltete und angeordnete Feder erbringt die erforderliche Federung des Riegelelementes auf kleinstem und flachstem Raum. Sie kann, insbesondere in industrieller Vorfertigung, praktisch auch beliebig klein hergestellt werden. Ihre Anordnung in dem flachen Hohlraum stellt eine ausreichende Halterung und Führung auch bei geringer Grösse dar. Sie verlangt als Montagehandlung nur einfaches Einsetzen, was gleichfalls bei geringer Grösse noch möglich ist.

Die erfindungsgemässe Vorrichtung ist damit in Fällen einsetzbar, in denen man bisher zu ganz anderen Mitteln greifen musste, wie einen Zahn umfassenden, sichtbaren Klammern.

Ihr Vorteil liegt dabei nicht nur in der flachen Ausbildung, d.h. geringen Höhe, sondern auch in der geringen Querschnittsfläche, insbesondere des Hohlquerschnitts. Denn der für das Riegelelement benötigte Hohlraum fällt immer gerade in den am meisten beanspruchten Querschnitt der Prothese, nämlich die Verbindung zwischen dem auf das festsitzende Prothesenteil aufsteckbaren Teil der abnehmbaren Prothese und deren übrigem Teil, der die eigentliche Prothesenfunktion hat.

Zweckmässigerweise ist das Riegelelement durch einen geraden vorderen Abschnitt der Feder gebildet.

Das Riegelelement und seine Federung sind dann in einem Teil verwirklicht.

Damit die Verriegelung dabei möglichst stabil ist, sollte der gerade vordere Federabschnitt auch in seiner vordersten Stellung nur mit einem Teil seines Querschnitts aus dem Hohlraum herausragen und mit dem übrigen Teil ihm Hohlraum gehalten sein.

Zugleich hat das den Vorteil, dass der Hohlraum dadurch abgeschlossen ist.

Die Stabilität der Verriegelung kann noch erheblich verbessert werden durch eine Führung des vorderen Abschnitts der Feder aus zwei an ihn im rechten Winkel sich anschliessenden geraden seitlichen Abschnitten, die an der Wandung des in diesem Falle, überhaupt vorzugsweise, quaderförmigen Hohlraums anliegen.

Ferner ist es vorteilhaft, wenn die Feder aus rechteckigem Federdraht besteht, dessen Kanten an der genannten Frontseite vorzugsweise abgeschrägt sind. Durch die damit entstehende flächige Anlage der Feder an der Gehäusewandung wird der das Riegelelement bildende vordere Federabschnitt besser geführt und gehalten und auch der Abschluss des Hohlraumes verbessert. Ausserdem hat rechteckiger Federdraht bei gleichem Querschnitt eine geringere Höhe als runder.

Der Federdraht sollte, rund oder rechteckig, eine Dicke von weniger als 0,7 mm, vorzugsweise 0,35–0,5 mm, haben.

Das Riegelelement, insbesondere in der Form der Feder, kann in einfacher Weise durch eine federnde Raste in dem Hohlraum gehalten sein. So ist es sicher gehalten und leicht auszuwechseln.

Die Feder ist, wie gesagt, mindestens etwa U-förmig, vorzugsweise etwa S-förmig («Schlangenfeder»).

Eine besonders vorteilhafte Ausführungsform der Erfindung ist die Integrierung der Klemmvorrichtung in ein vorgefertiges Geschiebe: An dem Geschiebeteil, das in das feststehende Prothesenteil eingearbeitet wird, befindet sich die Kerbe und an dem anderen der Hohlraum mit dem Riegelelement. Das Geschiebe kann dann auch kürzer sein als mit seiner bisherigen Klemmung, die eine bestimmte Länge des Geschiebes verlangt.

Für den voraussichtlich häufigsten Anwendungsfall der Erfindung, dass der Hohlraum in einem gegossenen Metallgerüst der Prothese angeordnet wird, gehört zweckmässigerweise zu dem Riegelelement ein gleichfalls industriell vorgefertigter Giesskern zur Erzeugung des Hohlraums, da auch der Giesskern, zumal in der geringen Grösse, rationeller industriell hergestellt wird.

Die industrielle Vorfertigung kann auch über den Giesskern hinaus auf das Metallgerüst ausgedehnt werden, insoweit, dass zur Erzeugung des Hohlraumes ein den Giesskern enthaltender, industriell vorgefertigter Kasten oder Halbkasten aus einer Legierung, die sich mit der Legierung des Metallgerüstes verbindet, in das Metallgerüst eingegossen wird.

Der Halbkasten kann besonders vorteilhaft an der am Zahnfleisch anliegenden Oberfläche des Metallgerüstes angeordnet werden. Sein Boden bildet dann unmittelbar die Oberfläche des Metallgerüsts und kann vergleichsweise dünn und trotzdem fest sein und ist von vornherein und daher mit Sicherheit vorhanden, so dass die Gefahr von Giessfehlern ausscheidet, die im Falle des Giessens der betreffenden Hohlraumwandung um so grösser wird, je geringer deren Dicke ist; die offene Seite des Halbkastens spart im Vergleich zu einem geschlossenen Kasten an der insgesamt erforderlichen Höhe des Hohlraums und seiner Wandung damit, dass nicht zusätzlich eine vorgefertigte Hohlraumwandung angegossen werden muss, sondern mit dem Guss gleich die Hohlraumwandung gebildet wird.

Der geschlossene – d.h. mit Ausnahme der Stirnseite, an der das Riegelelement aus dem Hohlraum heraustreten soll – Kasten kann ebenfalls eingegossen werden. Seine wesentliche Bedeutung dürfte es jedoch in anderem Zusammenhang haben, nämlich ohne Kern zum, auch nachträglichen, Ankleben oder Anlöten an einem Prothesengerüst.

Als besonders vorteilhafte Weiterbildung der Erfindung ist jedoch die Massnahme anzusehen, dass der Giesskern bzw. der Kasten oder Halbkasten mit dem Giesskern in ein industriell vorgefertigtes Formmodellteil geformt ist und dieses mit dem übrigen in die Giessform einzubettenden Formmodell zusammengeformt wird. Hier geht die Vorfertigung noch weiter und ersetzt Teile des Formmodells, die im Rahmen der individuellen Modellierung besonders diffizil wären, wie die Abdeckung des Halbkastens.

Das Formmodellteil, in dem der Giesskern allein oder der Kasten oder Halbkasten mit dem Giesskern in eine ausbrennbare Modellmasse eingeformt ist, die im Falle des Giesskerns allein den Giesskern oben, unten und seitlich umgeben wird und im Falle des, vorzugsweise aus einem Blech gekanteten, Halbkastens seitlich den Halbkasten und an dessen offener Seite den Giesskern umgeben wird, kann darüberhinaus leichter montierbar gestaltet werden, indem die Modellmasse ferner ein die Handhabung des Formmodellteils erleichterndes, vorzugsweise schmales, Griffteil bildet. Wo dieses Griffteil nicht mit in das gesamte Formmodell eingeht, sondern dann an dem Gussstück heraussteht, kann es abgeschnitten werden. Vorzugsweise ist das Griffteil mit Löchern versehen für eine Steckverbindung, zu der man es in herausstehender Form evtl. verwenden kann.

Denkbar sind auch Griffteile, die ganz oder teilweise aus einem nicht ausbrennbaren, dann zur Giessformmasse gehörenden Material bestehen.

An dem oben, unten und seitlich in Modellmasse eingeformten Giesskern sollte an einer von der Modellmasse freien Stirnseite ein Anker, vorzugsweise in Form eines Drahtbügels, o.dgl., herausstehen, der dann in die Giessformmasse eingebettet wird und so den Kern festhält, wenn er nach dem Ausbrennen der Modellmasse fast vollständig von dem flüssigen Metall umgeben und dessen Auftrieb ausgesetzt ist. Ähnliches gilt für den einzugiessenden Kasten oder Halbkasten. Der, wie bereits erwähnt, durch Kanten aus einem Blech hergestellte Halbkasten kann Vorsprünge zum Verankern in der Giessformmasse einfach in der Weise erhalten, dass man die für den Kasten überflüssigen Ecken des Blechzuschnitts zwischen der Stirnwand und den beiden Seiten nicht wegnimmt, sondern als Verlängerung der Seitenwände belässt.

Als ausschliesslich mit Reibschluss wirkende Klemmvorrichtung kommt der Erfindungsgegenstand hauptsächlich für Resilienz-Teleskopbrücken in Betracht.

Die Zeichnungen geben Ausführungsbeispiele der Erfindung und verschiedene Anwendungsbeispiele wieder.

Fig. 1 zeigt die Riegeleinrichtung einer Klemmvorrichtung in einem Längsschnitt (nach Linien I–I in Fig. 2 und 3).

Fig. 2 zeigt die Riegeleinrichtung im anderen Längsschnitt (nach Linie II–II in Fig. 1).

Fig. 3 zeigt die Riegeleinrichtung im Querschnitt (nach Linie III–III in Fig. 1).

Fig. 4 zeigt ein erstes Anwendungsbeispiel der Riegeleinrichtung nach Fig. 1–3.

Fig. 5 zeigt ein zweites Anwendungsbeispiel der Riegeleinrichtung nach Fig. 1–3.

Fig. 6 zeigt ein drittes Anwendungsbeispiel der Riegeleinrichtung nach Fig. 1–3.

Fig. 7–9 zeigen ein viertes Anwendungsbeispiel der Riegeleinrichtung.

Fig. 10 zeigt eine gegenüber Fig. 1–3 leicht abgewandelte, zu einem Formmodellteil ergänzte Riegeleinrichtung in einem Längsschnitt

Fig. 11 zeigt die Riegeleinrichtung nach Fig. 10 im anderen Längsschnitt (nach Linie XI–XI in Fig. 10).

Fig. 12 zeigt ein Einzelteil der Riegeleinrichtung nach Fig. 10 und 11 in perspektivischer Darstellung.

Fig. 13 zeigt ein Anwendungsbeispiel der Riegeleinrichtung nach Fig. 10–12

Fig. 14 zeigt das Anwendungsbeispiel nach Fig. 13 in einem späteren Zustand.

Fig. 15 zeigt das Anwendungsbeispiel nach Fig. 13 und 14 in einem noch späteren Zustand

Fig. 16 zeigt das Anwendungsbeispiel nach Fig. 13 bis 15 in einem Zustand zwischen Fig. 13 und Fig. 14.

Fig. 17 zeigt im grösseren Massstab einen Ausschnitt aus Fig. 16, einen Teil weggebrochen

Fig. 18 zeigt in einer Fig. 17 entsprechenden Darstellung eine weitere Abwandlung.

Ein Gehäuse 1 aus einer der in der Zahntechnik üblichen Legierungen, z.B. aus einer Chrom-Kobalt-Legierung oder aus einer Edelmetallegierung, setzt sich zusammen aus einer Hülse 2 und einem auf einem Endabschnitt ihrer Länge ihren Hohlquerschnitt ausfüllenden Vollmaterialstück 3.

Das Gehäuse 1 ist flach-quaderförmig. Im vorliegenden Beispiel beträgt seine Höhe 0,9 mm, die Länge 50 mm, die Breite 35 mm und die Wanddicke 0,2 mm.

In dem Gehäuse 1 sitzt eine nur innerhalb einer Ebene gebogene Feder 4. Ihr Federdraht hat quadratischen Querschnitt mit einer Kantenlänge von im vorliegenden Beispiel 0,4 mm.

An ihrem einen, rückwärtigen Ende liegt die Feder 4 an zwei Stellen 5 und 6 an dem Vollmaterialstück 3 an. Das dortige Ende des Federdrahts ist in Anlage an der Hülsenwandung zurückgewinkelt und mit einer Knickung 7 versehen, die in eine Ausnehmung 8 der Hülsenwandung eingerastet ist.

An ihrem anderen, vorderen Ende liegt die Feder 4 mit einem geraden Abschnitt 9 in der dortigen, offenen Stirnseite des Gehäuses. Auch hier ist das, mit 10 bezeichnete, Federdrahtende in Anlage an der Hülsen- bzw. Gehäusewand zurückgewinkelt. Es bildet damit zusammen mit einem auf der anderen Seite des Gehäusequerschnitts in gleicher Weise von dem vorderen Abschnitt 9 der Feder abgewinkelten geraden Abschnitt 11 eine Führung für die Bewegung, die der vordere Abschnitt 9 der Feder auszuführen hat;

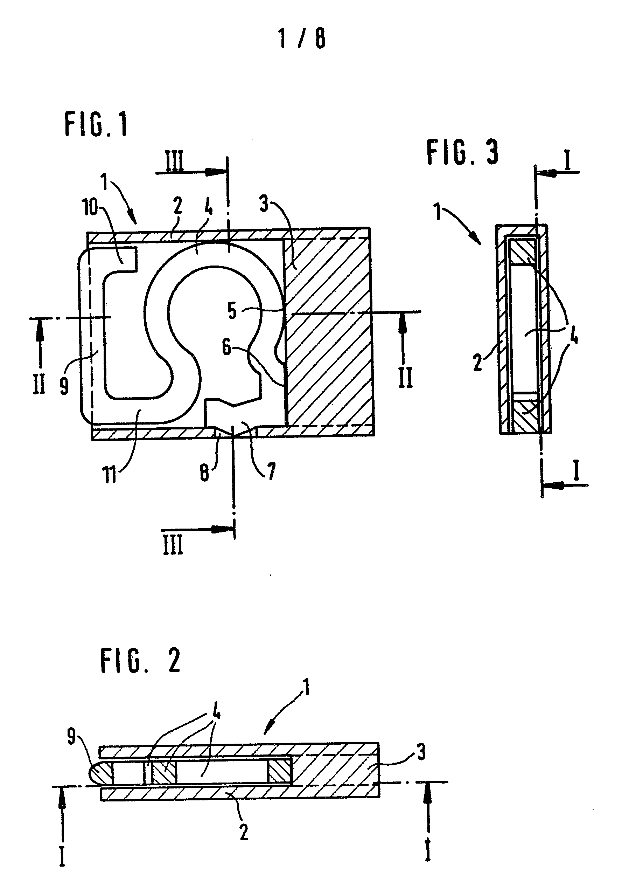

Die Feder 4 dient mit dem vorderen Abschnitt 9 als in eine Kerbe einrastender Riegel, Wie in Fig. 2 zu erkennen, sind dafür die vorderen Kanten des Federdrahtes am Abschnitt 9 zur Anpassung an den Kerbenquerschnitt abgeschrägt.

Die Kerbe ist in den im folgenden beschriebenen Anwendungsbeispielen jeweils mit 12 bezeichnet.

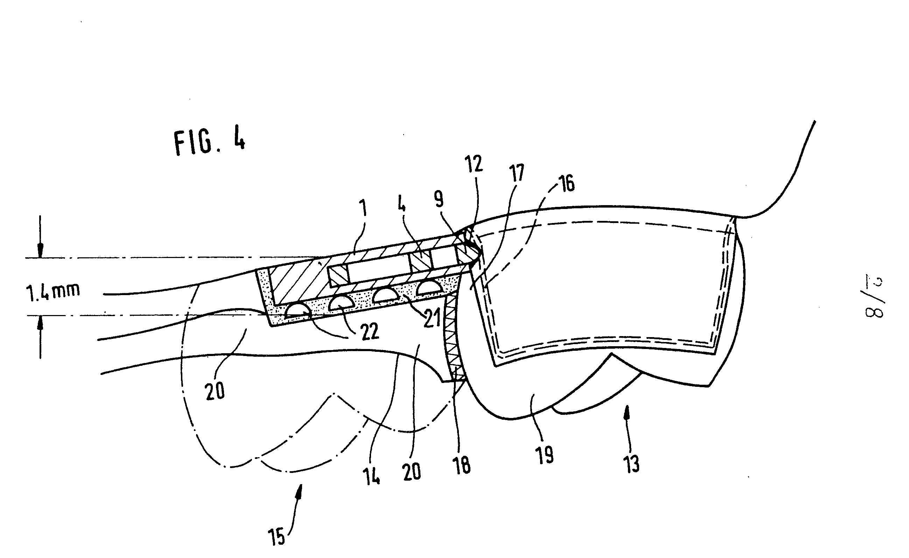

Fig. 4 zeigt zwei nebeneinanderliegende Zähne, einen überkronten Zahn 13 und einen an einer Prothese 14 sitzenden Ersatzzahn 15.

Der Zahn 13 ist auf seinem im Umriss gestrichelt angedeuteten Zahnstumpf 16 mit einer konusförmigen Innenkrone 17 versehen. Auf diese ist eine der Befestigung der Prothese 14 dienende und durch eine Lotschicht 18 mit der übrigen Prothese verbundene Aussenkrone 19 aufgesteckt. In einer Ausnehmung des Metallgerüsts 20 der Prothese ist mittels einer punktiert gezeichneten Kunststoffschicht 21 das Gehäuse 1, ggf. nachträglich, eingebaut worden. Es ist hier an seiner einen Seite mit Ankern 22 versehen.

Die erwähnte Kerbe 12 ist an der konusförmigen Innenkrone 17 des Zahns 13 angeordnet. Beim Aufstecken der Prothese 14 mit der Aussenkrone 19 auf die Innenkrone 17 rastet der vordere Abschnitt 9 der Feder 4 in die Kerbe 12 ein. Die Prothese 14 wird dadurch gehalten, und lässt sich erst unter Aufwendung grösserer Zugkraft abziehen. Unter dem flachen Gehäuse 1 erstreckt sich die Lotschicht 18 über einen vergleichsweise grossen Querschnitt der Prothese.

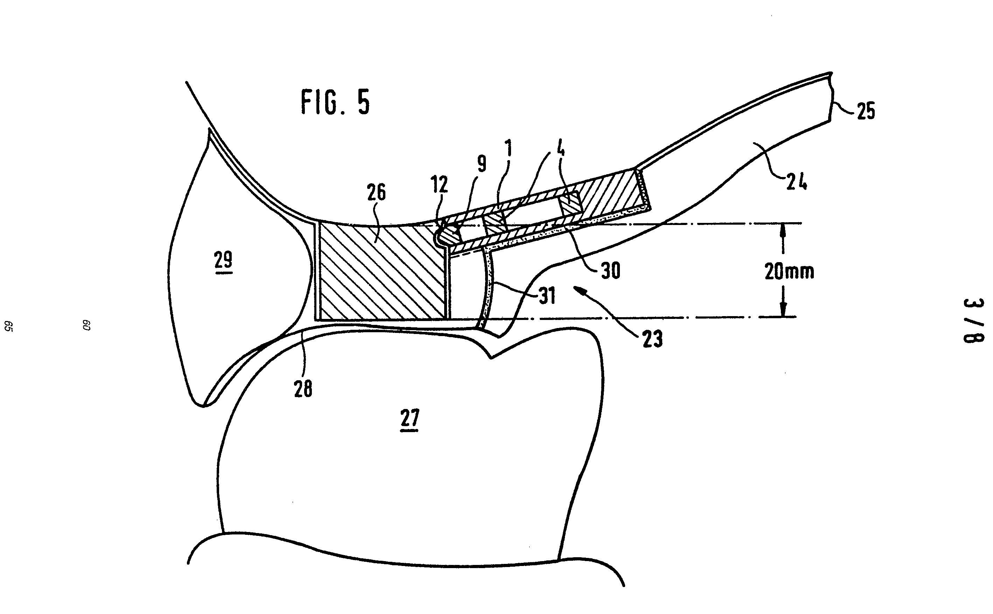

Fig. 5 zeigt, in der Situation rechtwinklig zu Fig. 4, einen linken Abschnitt einer Prothese 23; der Verbindungsbügel 24 zum rechten Abschnitt ist bei 25 weggebrochen. Der gezeichnete linke Abschnitt der Prothese ist auf einen Balken 26 aufgesteckt und abgestützt, der festsitzend mit zwei Zahnkronen, eine unter und eine über der Zeichenebene, verbunden ist. Die Prothese 23 bietet dem dargestellten Zahn 27 des Unterkiefers eine Gegenfläche 28 und ist aussen mit einer Verblendung 29 aus Kunststoff oder Keramik versehen, die optisch einen Zahn darstellt. Das Gehäuse 1 ist in einer nach seiner Grösse bemessenen Ausnehmung der Prothese 23 angeordnet und mittels einer punktiert gezeichneten Kunststoff- oder Lotschicht 30 befestigt. Die Kerbe 12, mit der die Feder 4 als Riegelelement zusammenwirkt, ist in dem Balken 26 angeordnet.

Dank seiner geringen Höhe konnte das Gehäuse 1 hier in die Prothese 23 und weitgehend sogar in den Verbindungsbügel 24 integriert werden und ist darunter noch ausreichend Platz für eine den Verbindungsbügel 24 mit dem übrigen Prothesenteil verbindende Kunststoff- oder Lotschicht 31.

Das Gehäuse 1 könnte auch an dem Verbindungsbügel 24 angegossen sein.

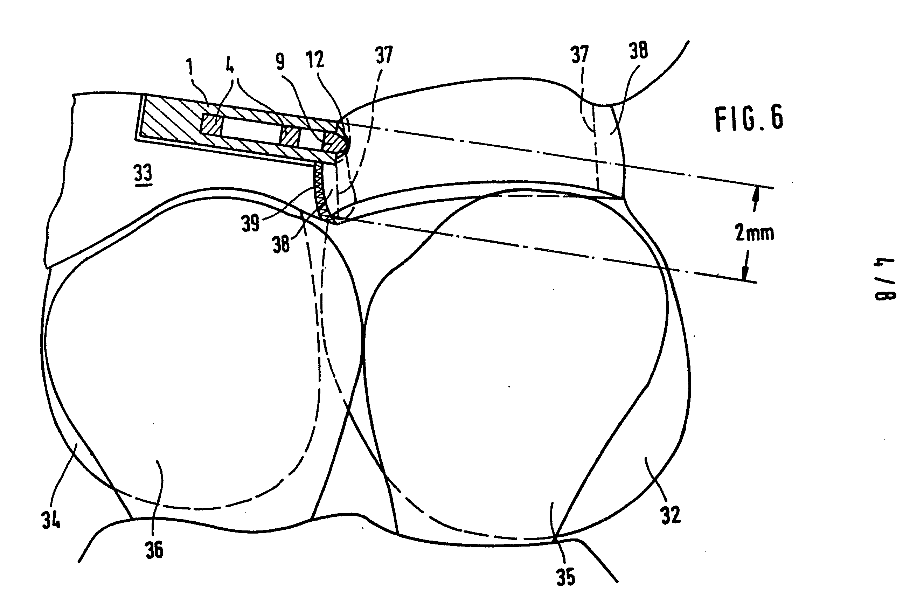

Fig. 6 zeigt wiederum zwei Zähne, einen überkronten Zahn 32 und einen an einer Prothese 33 angeordneten Ersatzzahn 34, nebeneinander. Vor den Zähnen 32 und 34 erscheinen in der Zeichnung zwei Zähne 35 und 36 des Unterkiefers. Sie haben an den Zähnen 32 bzw. 34 weitgehend schräge Gegenflächen. Dadurch kommt es in der Zeichnung zu der Überschneidung und dadurch bleibt auch nur sehr wenig Platz. für den Prothesenkörper und sein Metallgerüst. Die Überkronung des Zahns 32 weist zwei verschiedene Teile auf, nämlich den den Zahn bildenden Teil, zu dem die Bezugslinie 32 führt, und einen in der Zeichnung vor diesem liegenden Teil von wesentlich geringerer Höhe, der als (gestrichelt gezeichnete) Innenkrone 37 die Prothese 33 trägt, die mit einer Aussenkrone 38 auf die Innenkrone 37 aufgesteckt ist. Die Kerbe 12 ist in der Innenkrone 37 angeordnet. Das Gehäuse 1 mit der als Riegelelement in die Kerbe 12 greifenden Feder 4, 9 ist in das Metallgerüst der Prothese 33 eingegossen. Eine Lotschicht 39 verbindet dieses mit der Aussenkrone 38.

Auch in dieser Situation wäre anders als mit dem Riegelmechanismus in dem flachen Gehäuse 1 eine Rastbefestigung der Prothese 33 an der Innenkrone 37 nicht möglich.

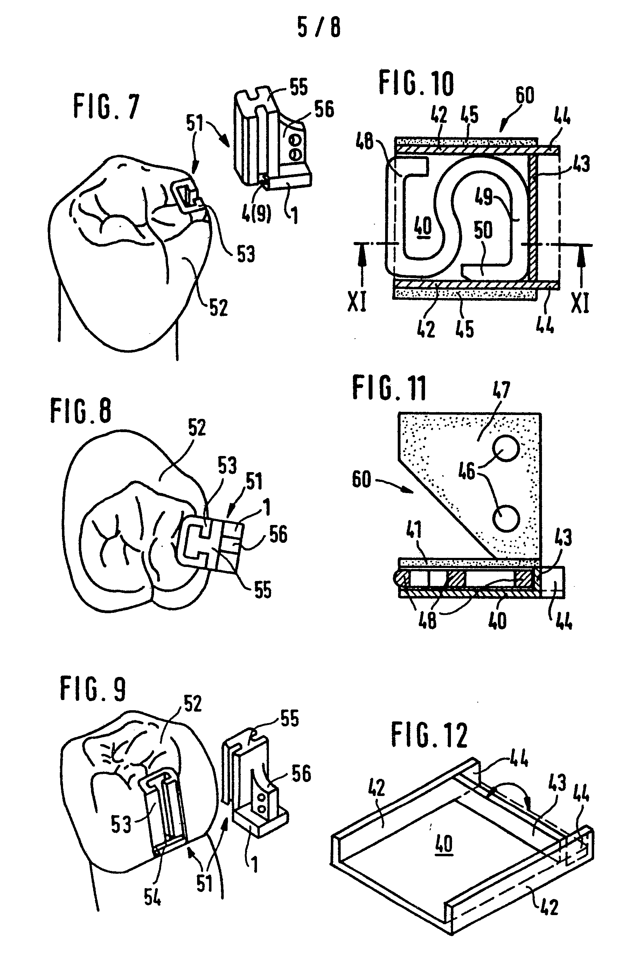

In Fig. 7 bis 9 ist die Anwendung einer Klemmvorrichtung wie nach Fig. 1 bis 3 an einem Geschiebe 51 dargestellt.

In eine feste Zahnkrone 52 ist ein Geschiebeteil 53 eingearbeitet, das unten eine Kerbe 54 aufweist. Das in das Geschiebeteil 53 einzuschiebende Geschiebeteil 55 ist unten mit einer Riegeleinrichtung wie nach Fig. 1 bis 3 versehen; man erkennt das Gehäuse 1, das in diesem Falle allerdings vorzugsweise in einem Stück mit dem Geschiebeteil 55 gegossen ist, und die Feder 4 bzw. deren vorderen Abschnitt 9. Eine mit zwei Löchern versehene Rippe 56 an dem Geschiebeteil 55 dient zur Verbindung des Geschiebeteils 55 mit dem Gerüst einer Prothese, die mittels des Geschiebes 51 an der festen Zahnkrone 52 befestigt werden soll.

Fig. 8 zeigt das zusammengesetzte Geschiebe in Draufsicht.

In der Riegeleinrichtung nach Fig. 10 bis 12 ist statt des kastenförmigen Gehäuses der Riegeleinrichtung nach Fig. 1 bis 3 ein Halbkasten 40 mit einer Abdeckung 41 aus ausbrennbarer Modellmasse vorgesehen.

Der Halbkasten 40 ist, wie aus Fig. 12 ersichtlich, durch Abkanten von Seitenwänden 42 und einer Stirnwand 43 aus einem Blechzuschnitt hergestellt. Die Seitenwände 42 ragen mit Fortsetzungen 44, die so lang sind wie die Stirnwand 43 hoch ist, über diese hinaus.

Die Abdeckung 41 aus Modellmasse umgreift bei 45 die Seitenwände 42 des Halbkastens. An ihrer Oberseite ist ein im Ganzen etwa dreieckiges, zwei Löcher 46 aufweisendes Griff- und Stützteil 47 aus ausbrennbarer Modellmasse angeformt.

Für eine Feder 48 gilt das gleiche wie für die Feder 4 mit der Ausnahme, dass die Feder 48 jeweils mit einem geraden Abschnitt 49 bzw. 50 an der Stirnwand 43 und der einen Seitenwand 42 des Halbkastens anliegt.

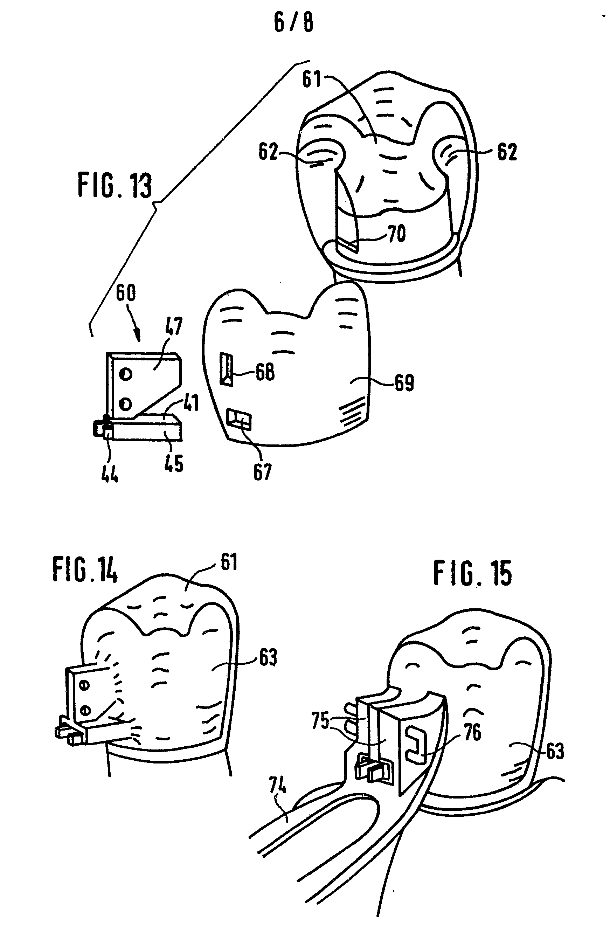

Der in Fig. 10 und 11 dargestellte Gegenstand, in dem die Feder 48 nur zur Verdeutlichung der erst später fertigen Riegeleinrichtung gezeichnet und in dem dargestellten Zustand statt der Feder ein den Hohlraum vollständig ausfüllender Giesskern vorhanden ist, bildet ein Formmodellteil 60, unter dessen Mitverwendung in der aus Fig. 13 ersichtlichen Weise ein Formmodell hergestellt wird:

Eine feste Zahnkrone 61 ist als Geschiebeteil mit zwei Rillen 62 gestaltet, und unter Eingriff in diese soll ein entfernbares Kronenteil 63 (Fig. 14) aufgesetzt, d.h. aufgeschoben werden können, das den Ersatzzahn vervollständigt und zur Befestigung einer Prothese dient.

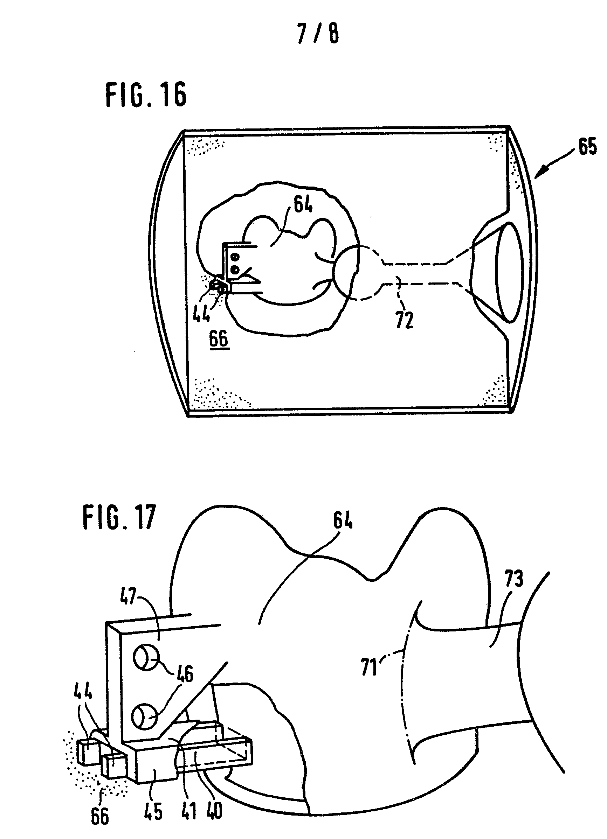

Um das entfernbare Kronenteil 63 in Metall giessen zu können, muss es in einer ausbrennbaren Masse, meistens Wachs, als Formmodell 64 (Fig. 16, 17) modelliert werden und in einer Giessform 65 in Formsand oder eine andere feuerfeste Formmasse 66 eingebettet werden.

Die Herstellung des Formmodells 64 unter Verwendung des Formmodellteils 60 lässt Fig. 13 erkennen mit zwei Aussparungen 67 und 68 in dem handmodellierten Teil 69: Das vorgefertigte Formmodellteil 60 wird mit der offenen Stirnseite des Halbkastens 40 und der Abdeckung 41 einschliesslich der Umgreifunge 45 des Halbkastens in die Aussparung 68 und das Griff- und Stützteil 47 wird mit seiner vorderen stumpfen Ecke in die Aussparung 68 so eingesetzt, dass die Aussparungen vollständig ausgefüllt werden. Dann wird der Übergang zwischen dem Formmodellteil 60 und dem handmodellierten Teil 69 um die Aussparungen 67 und 68 herum durch Aufbringen von Masse, die zugleich die Verbindung festigt, geglättet.

Fig. 13 lässt auch erkennen, dass dann die offene Stirnseite des Halbkastens 40, in der später die den Riegel bildende Vorderseite der Feder 48 sitzt, genau vor einer in der festen Zahnkrone 61 eingearbeiteten Kerbe 70 liegt, in der die Feder einrasten soll.

Fig. 16 zeigt das Formmodell 64 in der Giessform 65, wofür in der Zeichnung der Formsand in der Umgebung des Formmodells 64 weggelassen und nur die Einbettung der Fortsetzungen 44 der Seitenwände des Halbkastens 40 in die Formmasse dargestellt ist. Die Bedeutung dieser Einbettung liegt darin, dass allein sie nach dem Ausbrennen der Modellmasse und zugleich Füllen des so entstandenen Hohlraums mit der flüssigen Legierung den Halbkasten 40 mit den ihn ausfüllenden Kern festhält und daran hindert, aufgrund des leichteren spezifischen Gewichts des Kerns in der flüssigen Legierung aufgetrieben zu werden. Dies ist am besten aus Fig. 17 ersichtlich, wo der Halbkasten allerdings leer, ohne den Kern, gezeichnet ist: ohne die Einbettung an den Fortsetzungen 44 könnte der Halbkasten 40 so viel nach oben steigen, wie die Dicke der, weggebrochen gezeichneten, Abdeckung 41 beträgt. Die den Halbkasten 40 festhaltende Einbettung stellt sicher, dass die Abdeckung 41 und ihre Umgreifungen 45 des Halbkastens vollständig in Legierung ausgeformt werden, so dass dann der Halbkasten, dessen Material sich mit dem der gegossenen Legierung verbindet, zum integralen Bestandteil des Gussstückes wird.

In Fig. 17 ist schliesslich mit der Linie 71 noch angedeutet, wie der im Giesskanal 72 (siehe Fig. 16) verbleibende und an dem Gussstück sitzende Metallrest 73 abgeschnitten wird.

Fig. 14 und 15 verdeutlichen die Funktion des solchermassen im Giessverfahren hergestellten entfernbaren Kronenteils 63. Fig. 14 zeigt das Kronenteil allein auf die feste Zahnkrone 61 aufgesetzt, wobei die Feder 48 darin in der Kerbe 70 einrastet. In der Wirklichkeit ist jedoch, wie in Fig. 15 dargestellt, ein Prothesengerüst 74 mit dem entfernbaren Kronenteil 63 verbunden, und über die Darstellung in Fig. 15 hinaus sind darauf Ersatzzähne angebracht. Zur Verbindung des Prothesengerüstes mit dem Kronenteil 63 weist das Prothesenteil zwei Wangen 75 auf, die die Ausformung des vorherigen Griff- und Stützteils 47 des Formmodellteils 60 in der gegossenen Legierung umfassen und in der Flucht mit dessen Löchern 46 gleichfalls Löcher aufweisen, so dass ein hindurchgesteckter Drahtbügel 76 die Verbindung sichern kann. Alles dies wird von einem Ersatzzahn umschlossen.

Die Prothese ist dadurch abnehmbar, dass das entfernbare Kronenteil 63 unter leichtem Zurückweichen der Feder 48 aus der Kerbe 70 von der festen Zahnkrone 61 abgezogen werden kann.

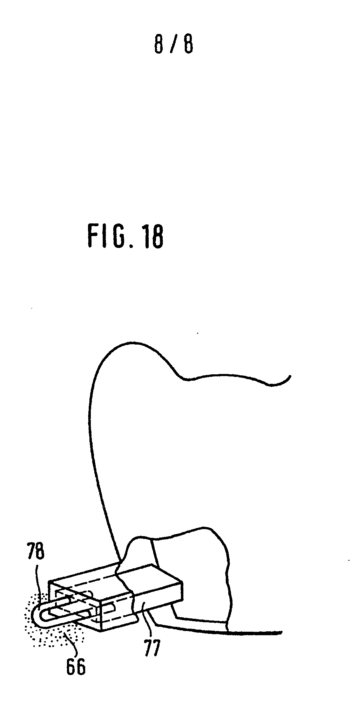

In Fig. 18 ist schliesslich ein Giesskern 77 gezeichnet, der nicht, wie bei dem vorgeschriebenen Ausführungsbeispiel, in ein umfassenderes Formmodellteil eingesetzt war – was er in entsprechender Weise hätte sein können – sondern in reiner Laborarbeit in das Formmodell eingearbeitet worden ist. Er ist mittels eines, insoweit den Fortsetzungen 44 entsprechenden, Drahtbügels 78 in der Formmasse verankert. Auch er wird im Zuge des Entformens des Gussstückes entfernt und hinterlässt einen Hohlraum, in den eine Schlangenfeder als Riegelelement eingesetzt wird.

**Patentansprüche**

1. Abnehmbare Zahnprothese (14, 19; 23; 33, 38; 55; 63, 74), die auf ein festsitzendes Prothesenteil (17; 26; 37; 52, 53; 61) aufsteckbar und an ihm anklemmbar ist mittels eines an der Zahnprothese, insbesondere nahe ihrer Unterseite, angeordneten gefederten Riegelelementes, das eine langgestreckte und schmale, in eine Kerbe (12; 54; 70) des festsitzenden Prothesenteils einrastende Frontseite (9) aufweist, dadurch gekennzeichnet, dass das Riegelelement durch eine in einem flachen Hohlraum (1; 40) an der Zahnprothese angeordnete Feder (4, 9; 48) gefedert ist, die nur innerhalb einer Ebene und zwar mindestens etwa U-förmig, gebogen ist.

2. Prothese nach Anspruch 1, dadurch gekennzeichnet, dass das Riegelelement durch einen, vorzugsweise geraden, vorderen Abschnitt (9) der Feder (4) gebildet ist, der, vorzugsweise auch in seiner vordersten Stellung, nur mit einem Teil seines Querschnitts aus dem Hohlraum (1; 40) herausragt.

3. Prothese nach Anspruch 2, dadurch gekennzeichnet, dass der Hohlraum (1; 40) im wesentlichen quaderförmig ist und dass an den vorderen Abschnitt (9) der Feder (4) im rechten Winkel zwei gerade seitliche Abschnitte (10; 11) anschliessen, die an der Wandung des Hohlraums (1; 40) geführt sind.

4. Prothese nach einem der Ansprüche 1 bis 3, dadurch gekennzeichnet, dass die Feder (4; 48) aus rechteckigem Federdraht besteht, dessen Kanten an der genannten Frontseite (9) vorzugsweise abgeschrägt sind.

5. Prothese nach einem der Ansprüche 1 bis 4, dadurch gekennzeichnet, dass das Riegelelement (4; 9) durch eine Raste (7, 8) der Feder (4) in dem Hohlraum (1) gehalten ist.

6. Prothese nach einem der Ansrüche 1 bis 5, dadurch gekennzeichnet, dass die Feder (4; 48) eine Dicke von weniger als 0,7 mm, vorzugsweise 0,35–0,5 mm, hat.

7. Prothese nach einem der Ansprüche 1 bis 6, dadurch gekennzeichnet, dass das Riegelelement integraler Bestandteil (1, 4, 54) eines Geschiebes (51) ist.

8. Verfahren zur Herstellung einer Prothese nach einem der Ansprüche 1 bis 7, in welcher der Hohlraum in einem gegossenen Metallgerüst (63) angeordnet ist, dadurch gekennzeichnet, dass zur Erzeugung des flachen Hohlraumes ein industriell vorgefertigter, zu der Feder gehöriger Giesskern (77) verwendet wird.

9. Verfahren nach Anspruch 8, dadurch gekennzeichnet, dass zur Erzeugung des flachen Hohlraumes ein den Giesskern enthaltender, industriell vorgefertigter Kasten oder Halbkasten (40) aus einer Legierung, die sich mit der Legierung des Metallgerüstes verbindet, in das Metallgerüst eingegossen wird.

10. Verfahren nach Anspruch 8 oder 9, dadurch gekennzeichnet, dass der Giesskern bzw. der Kasten oder Halbkasten (40) mit dem Giesskern in ein industriell vorgefertigtes Formmodellteil (60) eingeformt ist und dieses mit dem übrigen in die Giessform (65) einzubettenden Formmodell (4) zusammengeformt wird.

11. Formmodellteil zur Durchführung eines Verfahrens nach Anspruch 10, dadurch gekennzeichnet, dass der einen flachen Hohlraum nach Anspruch 1 formende Giesskern allein oder der im Anspruch 9 genannte Kasten oder Halbkasten (40) mit dem Giesskern in eine ausbrennbare Modellmasse eingeformt ist, die im Falle des Giesskerns allein den Giesskern oben, unten und seitlich umgibt und im Falle des, vorzugsweise aus einem Blech gekanteten, Halbkastens (40) seitlich (45) den Halbkasten (40) und an dessen offener Seite (41) den Giesskern umgibt.

12. Formmodellteil nach Anspruch 11, dadurch gekennzeichnet, dass an einer von Modellmasse freien Stirnseite des Giesskernes allein bzw. an einer Stirnseite des Halbkastens (40) Vorsprünge (44) zum Verankern des Kernes bzw. des Halbkastens (40) in der Giessformmasse (66) aus dem Formmodellteil (60) herausragen.

**Revendications**

1. Prothèse dentaire amovible (14, 19, 23, 33, 38, 55, 63, 74) qui peut se placer sur une partie de prothèse fixe (17, 26, 37, 52, 53, 61) et être fixée sur elle au moyen d'un élément de verrouillage élastique réalisé dans la prothèse dentaire, notamment à proximité de sa partie inférieure, et comportant un côté frontal (9) de forme allongée et étroite qui s'engage dans une encoche (12, 57, 70) de la partie de prothèse fixe, caractérisée en ce que l'élément de verrouillage est rendu élastique par un ressort (4, 9, 48) qui est placé dans une cavité plate (1, 40) ménagée dans la prothèse dentaire et qui n'est incurvé, au moins approximativement en forme d'U que dans un plan.

2. Prothèse selon la revendication 1, caractérisé en ce l'élément de verrouillage est constitué par une partie antérieure (9), de préférence rectiligne, du ressort (4) qui, de préférence également, ne dépasse, dans sa position la plus avancée, hors de la cavité (1, 40) que par une partie de sa section.

3. Prothèse selon la revendication 2, caractérisée en ce que la cavité (1, 40) a essentiellement une forme parallèlepipédique et en ce que la partie antérieure (9) du ressort (4) se prolonge à angle droit par deux parties latérales rectilignes (10, 11) qui sont guidées par la paroi de la cavité (1, 40).

4. Prothèse selon l'une des revendications 1 à 3, caractérisée en ce que le ressort (4, 48) est constitué par un fil métallique élastique rectangulaire dont les arêtes sont, au niveau du côté frontal (9), taillées de préférence en oblique.

5. Prothèse selon l'une des revendications 1 à 4, caractérisée en ce que l'élément de verrouillage (4, 9) est maintenu dans la cavité (1) par un cran d'arrêt (7, 8) du ressort (4).

6. Prothèse selon l'une des revendications 1 à 5, caractérisée en ce que le ressort (4, 48) a une épaisseur inférieure à 0,7 mm, comprise de préférence entre 0,35 et 0,5 mm.

7. Prothèse selon l'une des revendications 1, 6 caractérisée en ce que l'élément de verrouillage fait partie intégrante (1, 4, 54) d'une pièce d'insertion (51).

8. Procédé de fabrication d'une prothèse selon l'une des revendications 1 à 7 dans laquelles la cavité est réalisée dans une armature métallique moulée (63), caractérisé en ce que, pour réaliser la cavité plate, on utilise un noyau de moulage (77) préfabriqué industriellement qui fait partie du ressort.

9. Procédé selon la revendication 8, caractérisé en ce que, pour la réalisation de la cavité plate, on introduit dans l'armature métallique un caisson ou demi-caisson (40) préfabriqué industriellement, contenant le noyan de moulage et constitué par un alliage qui s'associe à l'alliage constituant l'armature métallique.

10. Procédé selon l'une des revendications 8 ou 9, caractérisé en ce que le noyau de moulage ou le caisson ou demi-caisson (40) associé au noyau de moulage est moulé dans une partie de modèle (60) préfabriquée industriellement et que celle-ci est moulée en même temps que le reste du modèle (64) qui doit être enrobé dans le moule (65).

11. Partie de modèle de moulage pour l'application du procédé selon la revendication 10, caractérisée en ce que le noyau de moulage qui forme une cavité plate selon la revendication 1 ou le caisson ou demi-caisson (40) mentionné dans la revendication 9 et associé au noyau de moulage sont moulés dans une masse de modèle qui peut être éliminée par combustion et qui, dans un dispositif ne comportant qu'un noyau de moulage, entoure le noyau de moulage en haut, en bas et sur les côtés et, dans un dispositif comportant le demi-caisson (40), réalisé de préférence par pliage d'une tôle, entoure le demi-caisson (40) sur le côté (45) et le noyau de moulage sur son côté ouvert (41).

12. Partie de modèle de moulage selon la revendication 11, caractérisée en ce que l'un des côtés frontaux du noyau de moulage ne comportant pas de masse de modèle ou un côté frontal du demi-caisson (40) comportent des parties saillantes (44) qui dépassent hors de la partie de modèle (60) pour l'ancrage du noyau ou du demi-caisson (40) dans la masse de moulage (66).

**Claims**

1. Removable tooth prosthesis (14, 19; 23; 33, 38; 55; 63, 74), which can be mounted on a tightly jammed prosthesis part (17; 26; 37; 52, 53; 61) and can be clamped on said part by means of a sprung stop element disposed on the tooth prosthesis, in particular close to its underside, which has an extended and narrow front side (9) engaging in a notch (12; 54; 70) of the tightly jammed prosthesis part, characterised in that the stop element is sprung by a spring (4, 9; 48) disposed in a shallow cavity (1; 40) on the tooth prosthesis, and said spring is only curved within one plane, and in fact at least roughly U-shaped.

2. Prosthesis according to Claim 1, characterised in that the stop element is formed by a preferably straight front part (9) of the spring (4), which, preferably also in its most forward position, projects from the cavity (1; 40) only with a part of its cross section.

3. Prosthesis according to Claim 2, characterised in that the cavity (1; 40) is substantially square-shaped and in that at the front part (9) of the spring (4) at right angles there are two straight lateral parts (10; 11), which are guided along the wall of the cavity (1; 40).

4. Prosthesis according to one of Claims 1 to 3, characterised in that the spring (4; 48) consists of rectangular spring wire, the edges of which are preferably bevelled at the front seide (9).

5. Prosthesis according to one of Claims 1 to 4, characterised in that the stop element (4; 9) is held by a detention (7, 8) of the spring (4) in the cavity (1).

6. Prosthesis according to one of Claims 1 to 5, characterised in that the spring (4; 48) has a thickness of less than 0.7 mm, preferably 0,35 to 0.5 mm.

7. Prosthesis according to one of Claims 1 to 6, characterised in that the stop element is an integral component (1, 4, 54) of a friction grip slide attachment (51).

8. Process for the production of a prosthesis according to one of Claims 1 to 7, in which the cavity is disposed in a cast metal structure (63), characterised in that to produce the shallow cavity an industrially prefabricated casting core (77) belonging to the spring is used.

9. Process according to Claim 8, characterised in that to produce the shallow cavity an industrially prefabricated box or half-box (40) containing the casting core and made of an alloy which joins with the alloy of the metal structure is poured into the metal structure.

10. Process according to Claim 8 or 9, characterised in that the casting core or box or half box having the casting core is moulded in an industrially prefabricated pattern part (60) and is moulded together with the remaining mould (64) to be embedded in the casting mould (65).

11. Pattern part for carrying out a process according to Claim 10, characterised in that the casting core alone forming a shallow cavity according to Claim 1 or the box or half box (40) with the casting core according to claim 9 is moulded into a combustible moulding compound, which in the case of the casting core alone surrounds the casting core at the stop, at the bottom and at the side and in the case of the half box (40), preferably folded out of one sheet, surrounds the half box (40) at the sides and surrounds the casting core at the open side (41) of the half box (40).

12. Pattern part according to Claim 11, characterised in that at one front side of the casting core alone free of modelling compound or at one front side of the half box (40) protrude projections (44) from the pattern part (60) to retain the core or the half box (40) in the casting mould compound (66).

FIG.1

FIG. 3

FIG. 2

FIG. 4

0 136 671

FIG. 5

FIG.6

FIG. 7

FIG. 10

FIG. 8

FIG. 11

FIG. 9

FIG. 12

FIG. 13

61

62

62

70

60

47

68

69

41

44

45

67

FIG. 14

61

63

FIG. 15

75

76

74

63

FIG. 16

FIG. 17

# FIG. 18